# EUROPÄISCHE PATENTANMELDUNG

(11) **EP 0 989 335 A2**
(43) Veröffentlichungstag der Anmeldung: **29.03.2000**
(21) Anmeldenummer: 99117244.6
(22) Anmeldetag: 02.09.1999
(51) Int. Cl.: F16H 25/20, F16D 1/02

(54) **Festlagereinrichtung für eine Spindel eines linearen Gewindetriebs**

(30) Priorität: 23.09.1998 DE 19843549
(71) Anmelder: Alltec GmbH, 71111 Waldenbuch (DE)
(72) Erfinder:
(74) Vertreter: Patentanwälte Ruff, Beier, Schöndorf und Mütschele

(57) **Zusammenfassung**

Es wird eine Festlagereinrichtung (1) für eine Spindel eines linearen Gewindetriebs beschrieben. Der Motor (8) des Gewindetriebs ist in die Festlagereinrichtung integriert. Seine über eine Wellenlageranordnung (12) gelagerte Motorwelle (10) trägt eine auf die Motorwelle aufgeklebte Spindelaufnahmeeinrichtung. Während die radiale Lagerung der Kombination Motorwelle/Spindelaufnahmeeinrichtung über die Lageanordnung für die Motorwelle erfolgt, wird die axiale Lagerung durch ein gesondertes, als axiales Nadellager ausgebildetes Axiallager geschaffen, das in einen unmittelbar an das Motorgehäuse angeschraubten Axiallagergehäuse sitzt. Die Festlagereinrichtung kommt ohne Kupplung zwischen Motor und angetriebener Spindel aus und zeichnet sich durch eine axial kompakte Bauform aus.

## Beschreibung

Die Erfindung betrifft eine Festlagereinrichtung für eine Spindel eines linearen Gewindetriebs.

Spindelbetriebene lineare Gewindetriebe werden vorwiegend zum linearen Vorschub, insbesondere zum Heben von Lasten eingesetzt. Sie haben mindestens eine drehbar antreibbare Gewindespindel und mindestens eine mit der Spindel zusammenwirkenden Arbeitsmutter oder Lastmutter, die zum Zusammenwirken mit der Spindel ausgebildet und verdrehsicher entlang der Spindel geführt ist. Die Spindel ist normalerweise mehrfach, in der Regel an beiden Endbereichen gelagert. Die axiale Führung erfolgt dabei über eine Festlagereinrichtung, die die gesamte axiale Belastung der Spindel aufnehmen muß. Fertigungstoleranzen und unterschiedliche axiale Wärmeausdehnungen von Spindel und den sie tragenden Elementen müssen an den übrigen Lagerstellen, den Loslagern, ausgeglichen werden, wobei üblicherweise ein Loslager an dem dem Festlager gegenüberliegenden Ende der Spindel vorgesehen ist.

Bekannte Festlagereinrichtungen haben ein beispielsweise aus Stahl oder Aluminium bestehendes, fest auf einem Spindelträger montierbares Festlagergehäuse, in dem Lagereinheiten zur axialen und radialen Lagerung des zugeordneten Spindelendes vorgesehen sind, beispielsweise Schrägkugellager. Der mit dem Festlager zusammenwirkende Spindelendabschnitt muß zur Anpassung an das Festlager entsprechend so bearbeitet oder verändert werden, daß er in das Festlager von einer Seite eingesetzt werden kann und ein zapfenförmiges Ende auf der gegenüberliegenden Rückseite hinausragt. An die Rückseite des Festlagers kann ein Motor über einen Flansch und eine Kupplung angebaut werden. Der beispielsweise rohrförmige Flansch dient zur Befestigung des Motors am Lagergehäuse und kann gleichzeitig als Gehäuse für die Kupplung dienen. Mit der Kupplung wird das Antriebsmoment des Motors verspannungsfrei auf den durchragenden Zapfen der Spindel übertragen. Derartige Systeme arbeiten einwandfrei und sind langlebig, insbesondere auch wegen der durch die Kupplung ermöglichten verspannungsfreien Verbindung der Motorwelle mit der Spindel. Sie erfordern jedoch im Festlagerbereich eine gewisse Baulänge, die allgemein unerwünscht und insbesondere bei beengten Einbauumgebungen problematisch ist.

Demgemäß liegt der Erfindung die Aufgabe zugrunde, eine Festlagereinrichtung der genannten Art zu schaffen, die einen kompakten Aufbau eines linearen Gewindetriebes ermöglicht.

Zur Lösung dieser Aufgabe schlägt die Erfindung eine Festlagereinrichtung mit den Merkmalen von Anspruch 1 vor.

Eine erfindungsgemäße Festlagereinrichtung hat eine antreibbare, mittels einer Wellenlageranordnung drehbar gelagerte Antriebswelle, eine mit der Antriebswelle fest verbindbare oder verbundene Spindelaufnahmeeinrichtung, an der ein Spindelendabschnitt lösbar befestigbar ist, und eine spindelseitig von der Wellenlageranordnung angeordnete Axiallagereinrichtung zur axialen Lagerung der Spindelaufnahmeeinrichtung.

Nach der Erfindung wird also ein spindelseitiges Ende einer Antriebswelle, also eine Welle einer Antriebskomponente des Gewindetriebes, mittels der fest mit ihr verbindbaren oder verbundenen und bei Drehung koaxial mit ihr drehenden Spindelaufnahmeeinrichtung befähigt, direkt, insbesondere ohne Zwischenschaltung einer Kupplung, an der anzutreibenden Spindel anzugreifen. Durch die Axiallagereinrichtung, die im wesentlichen sämtliche auf die Spindelaufnahmeeinrichtung wirkenden axialen Kräfte aufnehmen kann, wird die Wellenlageranordnung im wesentlichen von allen Axialkräften entlastet und braucht nur noch radiale Kräfte aufzunehmen. Dadurch ist ein besonders verlustarmer, verschleißarmer und lagerschonender Rundlauf der Antriebswelle möglich. Andererseits kann die Axiallagereinrichtung für die Aufgabe der Aufnahme von Axiallasten optimiert werden, denn die Radiallasten können durch die für die Antriebswelle ohnehin erforderlichen Radiallager der Wellenlageranordnung aufgenommen werden. Dies ermöglicht die Verwendung kostengünstiger und/oder axial stark belastbarer Axiallager. Durch den Wegfall der bisher zur Entlastung des Motors erforderlichen Kupplung können festlagerseitig sehr kompakte Baulängen realisiert werden. Die Spindelaufnahmeeinrichtung kann zur drehfesten Aufnahme eines im wesentlichen unbearbeiteten Spindelendes ausgebildet sein, was Kosten und Zeit beim Zusammenbau oder Umbau eines Gewindetriebes spart.

Bei der Antriebswelle kann es sich beispielsweise um eine Abtriebswelle eines zwischen dem Antriebsmotor des Gewindetriebes und der anzutreibenden Spindel vorgesehenen Getriebes handeln. Dann kann die Festlagereinrichtung auch als Getriebe mit integrierten Festlager bezeichnet werden. Bei einer besonders bevorzugten Ausführungsform ist der Motor des Gewindetriebes in die Festlagereinrichtung integriert, wobei vorzugsweise die Antriebswelle durch die Motorwelle selbst gebildet ist. In diesem Fall kann ein Motor mit integriertem Festlager geschaffen werden. Durch die der ohnehin vorhandenen Wellenlageranordnung der Motorwelle spindelseitig vorgeschaltete Axiallagereinrichtung wird die Motorwelle im wesentlichen vollständig von Axialkräften entlastet. Damit kann ohne Kupplung oder dergleichen ein störungsfreier, verlustarmer Motorlauf ermöglicht werden.

Eine bevorzugte Weiterbildung sieht vor, daß die Axiallagereinrichtung in einem gesonderten Axiallagergehäuse untergebracht ist, das vorzugsweise unmittelbar an ein Gehäuse einer Antriebskomponente des Gewindetriebs, insbesondere des Motors oder eines Getriebes anbringbar, insbesondere an dieses anschraubbar ist. Dadurch kann es ermöglicht werden, herkömmliche Motoren ohne oder mit nur geringen Modifikationen durch Befestigung des Axiallagergehäuses zum Aufbau einer erfindungsemäßen Festlagereinrichtung zu modifizieren. Die unmittelbare Befestigung unterstützt die erforderliche mechanische Stabilität der Lagereinrichtung und ermöglicht in Axialrichtung besonders kompakte Bauformen.

Die Axiallagereinrichtung ist bei einer bevorzugten Ausführungsform zur Aufnahme von Axialkräften in beiden Axialrichtungen ausgebildet, so daß weder axiale Zug- noch Druckkräfte auf die Antriebswelle übertragen werden können. Da für die radiale Abstützung der starren Kombination von Antriebswelle und Spindelaufnahmeeinrichtung durch die Wellenlageranordnung ausreichend gesorgt ist, kann die Axiallagereinrichtung zweckmäßig als reines Axiallager ausgebildet sein, das keine radiale Führung ermöglichen muß. Hierdurch können konstruktiv einfache Lösungen verwendet werden, die trotzdem große Axialkräfte aufnehmen können und die Lagerung der Antriebswelle voll entlasten.

Bei einer bevorzugten Ausführungsform ist die Axiallagereinrichtung als Zylinderrollenlager bzw. Axialnadellager ausgebildet, bei dem sich die Axialkräfte zwischen der sich drehenden Seite der Spindelaufnahmeeinrichtung und der festgehaltenen Gehäuseseite nicht, wie bei Kugellagern, nur punktförmig übertragen werden, sondern entlang von Mantellinien der zylindrischen, koplanaren Wälzkörper. Die für einen problemfreien Betrieb erforderliche Mindestaxialspannung kann konstruktiv beispielsweise dadurch bereitgestellt werden, daß die Lager mittels eines Gewindeeinstellringes vorgespannt sind.

Bei einer bevorzugten Ausführungsform weist die Axiallagereinrichtung eine Einstelleinrichtung für das axiale Lagerspiel auf. Hierzu ist vorzugsweise vorgesehen, daß eine im wesentlichen ebene, axiale Lageraußenfläche an einer innerhalb eines Gewindes geführten, axial verschiebbaren Einstellmutter ausgebildet oder dieser zugeordnet ist, wodurch der axiale Abstand zwischen einer der Spindelaufnahmeeinrichtung zugeordneten Laufebene und einer dem Gehäuse zugeordneten parallelen Laufebene durch Drehung der Einstellmutter stufenlos einstellbar ist.

Die Spindelaufnahmeeinrichtung ist zweckmäßig sowohl drehfest, als auch axial fest mit der Antriebswelle verbunden, wobei sie vorzugsweise unmittelbar mit dieser verbunden bzw. an ihr befestigt ist. Es ist möglich, die Spindelaufnahmeeinrichtung einstückig mit der Antriebswelle auszubilden, wodurch eine besonders feste Verbindung geschaffen werden kann. Meist ist es herstellungstechnisch günstiger, gesonderte, für die Verbindung miteinander ausgebildete Teile vorzusehen. Insbesondere kann die Spindelaufnahmeeinrichtung auf die Antriebswelle axial aufsteckbar sein, was die Montage besonders einfach macht. Gesonderte, mit Antriebswellen verbindbare Spindelaufnahmeeinrichtungen ermöglichen vorteilhaft den Einsatz von Standard-Antriebskomponenten, ohne daß deren Antriebswellen gesondert bearbeitet werden oder geformt sein müssen.

Zur Befestigung einer gesonderten Spindelaufnahmeeinrichtung an der Antriebswelle sind alle geeigneten Methoden möglich. Bevorzugt werden solche Befestigungsarten, die eine axialspannungsfreie Befestigung an der Antriebswelle ermöglichen, so daß diese durch die Befestigung nicht gespannt und damit ungünstig belastet wird. Bekannte formschlüssige Verbindungen, beispielsweise Schraubverbindungen, sind möglich. Bei einer bevorzugten Ausführungsform ist die Spindelaufnahmeeinrichtung stoffschlüssig mit der Antriebswelle verbunden. Die Verbindung kann durch Schweißen oder Löten hergestellt werden. Besonders bewährt hat sich eine Verklebung, bei der keine wärmeinduzierten Spannungen und/oder mechanischen Spannungen auftreten. Eine im wesentlichen kraftschlüssige Klebeverbindung hat sich überraschenderweise als hinreichend fest erwiesen. Die zusammenzuklebenden Teile können in ihren an die Klebstoffschicht grenzenden Oberflächenbereichen eine die Festigkeit der Klebeverbindung unterstützende Oberflächenbeschaffenheit aufweisen, beispielsweise eine Aufrauhung oder dergleichen. Zur ggf. gewünschten zusätzlichen Drehsicherung können die Antriebswelle und die Spindelaufnahmeeinrichtung für eine in Umfangsrichtung formschlüssige Verbindung ausgestaltet sein, beispielsweise dadurch, daß die Antriebswelle im Aufsteckbereich einen unrunden Querschnitt, insbesondere eine Kerbverzahnung oder dergleichen aufweist, und daß die aufsteckbare Spindelaufnahmeinrichtung ein entsprechendes Gegenprofil aufweist.

Durch die Klebeverbindung ist auch eine für die Spannungsfreiheit der Antriebswelle besonders vorteilhafte Befestigungsmethode möglich, bei der die Spindelaufnahmeeinrichtung auf die Antriebswelle gesteckt und der Kontaktbereich mit Klebstoff versehen wird, und bei der bei noch nicht ausgehärtetem Klebstoff das Lagerspiel des Axiallagers eingestellt wird, wobei sich unter Umständen die Spindelaufnahmeeinrichtung auf der Antriebswelle noch geringfügig axial verschieben kann. Somit findet die Spindelaufnahmeeinrichtung durch den Lagereinstellvorgang ihre optimale Axialposition, bei der im Ruhezustand keine axialen Spannungen vom Lager auf die Antriebswelle gelangen werden. Die Lagerspieleinstellung kann auch vor Befestigung des Lagers an dem Antriebselement, insbesondere dem Motor, erfolgen.

Die Spindel kann durch jede geeignete Weise an und/oder in der Spindelaufnahmeeinrichtung derart befestigt werden, daß eine bzgl. der auftretenden Drehmomente ausreichend drehfeste und axial feste Verbindung hergestellt wird. Besonders bevorzugt ist eine Ausführungsform, bei der die Spindelaufnahmeeinrichtung als Klemmeinrichtung für einen Spindelendabschnitt ausgebildet ist, wobei dieser vorzugsweise radialsymmetrisch eingeklemmt wird. Eine Ausbildung nach Art eines Spannfutters mit veränderlichen Dimensionen einer Spindelaufnahmeöffnung ist möglich. Bevorzugt ist eine Spindelaufnahmeöffnung fester Dimension, insbesondere mit einem Innenkonusabschnitt, in die ein der Spindel zugeordneter, komplementär dimensionierter Einführabschnitt, der insbesondere als Außenkonus ausgebildet sein kann, axial einführbar ist, ohne daß eine Relativdrehung zwischen Spindelaufnahmeeinrichtung und Spindel erforderlich ist. Eine derartige Ausführung ermöglicht einen spielfreien, koaxialen bzw. gut zentrierten Sitz der Spindel in der Spindelaufnahmeeinrichtung.

Eine Passung zwischen Spindelende und Spindelaufnahmeeinrichtung kann durch geeignete materialabtragende Bearbeitung des Spindelendabschnittes erreicht werden. Eine arbeits- und zeitaufwendige Spindelbearbeitung kann jedoch weitgehend entfallen, wenn ihr mindestens ein lösbar an einem Spindelendabschnitt befestigbares, insbesondere auf den Spindelendabschnitt aufschraubbares Adapterteil zugeordnet ist, das wiederum zur lösbaren Befestigung an der Spindelaufnahmeeinrichtung ausgebildet ist. Insbesondere kann das Adapterteil eine zur Einführung in die Spindelaufnahmeöffnung angepaßte, insbesondere eine einem Innenkonus angepaßte konische Außenkontur haben. Durch Aufschrauben des Adapterteils auf das abgesägte und ggf. entgratete Spindelende wird dieses einerseits mit einem Außenkonus versehen, der einen spielfreien Paßsitz in dem Innenkonus der Spindelaufnahmeeinrichtung ermöglicht. Andererseits kann das aufgeschraubte Adapterteil einen radialen Vorsprung bilden, der zur axialen Einpressung des konischen Spindelendabschnittes in die Spindelaufnahmeeinrichtung durch eine geeignete Spanneinrichtung hintergriffen werden kann. Die Spanneinrichtung kann insbesondere in Form einer einen spindelseitigen Radialvorsprung hintergreifenden, auf ein Außengewinde der Spindelaufnahmeeinrichtung aufschraubbaren überwurfschraube vorliegen, bei deren Aufschrauben das Spindelende axial in die Spindelaufnahmeöffnung eingepreßt wird.

Wenn der Lagereinrichtung ein Satz von mindestens zwei unterschiedlichen Adapterteilen zur Anpassung der Spindelaufnahmeeinrichtung an Spindeln unterschiedlicher Durchmesser und/oder Gewinde zugeordnet ist, so ist die Lagereinrichtung ohne Aufwand für praktisch alle Spindeln eines geeigneten Durchmesserbereiches verwendbar.

Diese und weitere Merkmale gehen außer aus den Ansprüchen auch aus der Beschreibung und der Zeichnung hervor, wobei die einzelnen Merkmale jeweils für sich allein oder zu mehreren in Form von Unterkombinationen bei einer Ausführungsform der Erfindung und auf anderen Gebieten verwirklicht sein können. Ein Ausführungsbeispiel wird anhand der Zeichnungsfigur erläutert. Es zeigt:

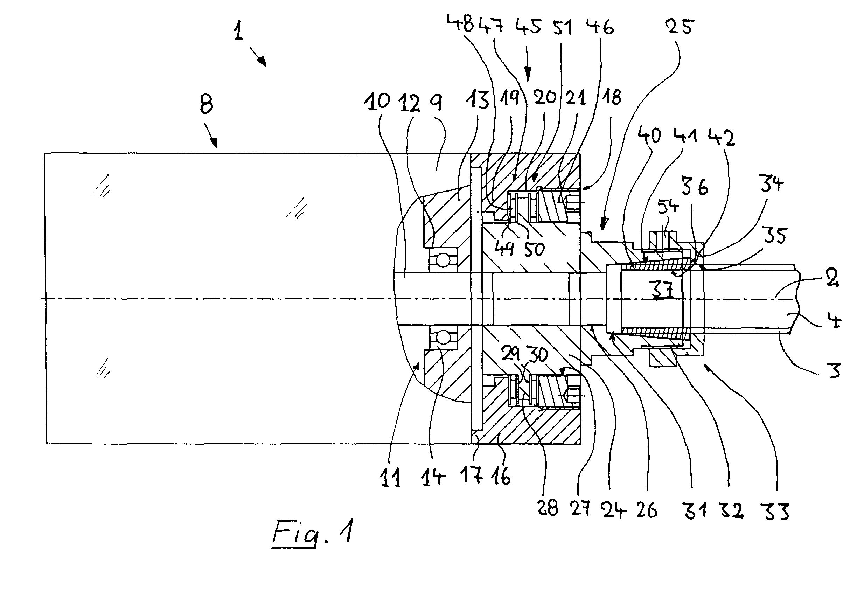

- Fig. 1: eine teilweise geschnittene, schematische Draufsicht auf eine Ausführungsform einer erfindungsgemäßen Festlagereinrichtung mit einem daran befestigten Spindelendabschnitt.

In Fig. 1 ist in Draufsicht und teilweisen Schnitt eine Ausführungsform einer erfindungsgemäßen Festlagereinrichtung 1 für einen spindelbetriebenen linearen Gewindetrieb gezeigt. Dieser hat eine um eine Spindelachse 2 drehbare, mit einem Spindelaußengewinde 3 versehene Spindel 4, bei der sich beispielsweise um eine Kugelgewindespindel, eine Steilgewindespindel oder, wie im Beispiel, um eine Trapezgewindespindel handeln kann. Die Spindel 4 ist mehrfach, nämlich an ihren beiden Endbereichen gelagert, wobei die axiale Führung über die gezeigte Festlagereinrichtung 1 erfolgt, die die gesamte axiale Belastung der Spindel 4 aufnehmen muß. Fertigungstoleranzen und unterschiedliche axiale Wärmeausdehnungen der Spindel im Vergleich zu den den Gewindetrieb tragenden Elementen werden an dem gegenüberliegenden, nicht gezeigten Loslager ausgeglichen.

Die Spindel wird von einem in zwei Drehrichtungen betreibbaren Elektromotor 8 angetrieben, der in einem quaderförmigen, verwindungssteifen Metall-Motorgehäuse 9 untergebracht ist. Eine Motorwelle 10 ist im Motorgehäuse 9 jeweils an den Stirnseitenbereichen durch eine Wellenlageranordnung 11 gelagert, von der nur das vordere, in einer zylindrischen Ausnehmung 12 der Motorgehäuse-Stirnwand 13 sitzende vordere Rillenkugellager 14 gezeigt ist. Dieses ist im Beispiel einreihig ausgeführt und eignet sich besonders für hohe Drehzahlen. Es kann mittlere radiale und kleine axiale Belastungen aufnehmen. Die Motorwelle 10 ragt im Bereich der Stirnwand 13 um etwa das Doppelte ihres Durchmessers aus dem Motorgehäuse 9 heraus.

Auf die Stirnseite 13 ist mit vier in den Eckbereichen angeordneten, nicht gezeigten axialen Befestigungsschrauben ein metallisches Axiallagergehäuse 16 aufgeschraubt, das sich über einen rechteckigen, umlaufenden Rand 17 derart an der Stirnwand 13 abstützt, das im Mittelbereich nahe der Motorwelle zwischen Stirnwand 13 und dem Axiallagergehäuse ein axialer Abstand von etwa einem Viertel des Spindeldurchmessers verbleibt. Das Axiallagergehäuse 16 hat eine koaxial zur Motorwellenachse 2 ausgerichtete, rotationssymmetrische axiale Bohrung 18, die auf der motorzugewandten Seite einen nach innen vorstehenden Flanschabschnitt 19 hat, an den sich ein glattwandiger zylinderabschnitt 20 und ein Innengewindeabschnitt 21 gleichen Durchmessers anschließen.

Auf den über die Stirnwand 13 hinausragenden zylindrischen, oberflächlich aufgerauhten Abschnitt der Motorwelle 10 ist ein rotationssymmetrischer, metallischer Körper 24 einer Spindelaufnahmeeinrichtung 25 axial aufgesteckt. Der Körper 24 hat hierzu eine im Durchmesser dem Durchmesser der Motorwelle 10 angepaßte zentrische, zylindrische, an ihrer Innenseite vorzugsweise aufgerauhte Bohrung 26, die einen spielfreien Sitz der Spindelaufnahmeeinrichtung auf der Motorwelle gewährleistet. Motorwelle und Spindelaufnahmeeinrichtung sind in ihrem zylindrischen Kontaktbereich miteinander verklebt und dadurch sowohl drehtest, als auch axial fest miteinander verbunden. Eine derartige Klebeverbindung hat sich überraschenderweise als ausreichend drehtest erwiesen. Durch die vorzugsweise vorzunehmende Aufrauhung der Klebeoberflächen kann eine Klebstoffschicht nicht nur kraftschlüssig, sondern auch formschlüssig an den Klebeoberflächen angreifen. Falls eine zusätzliche formschlüssige Drehsicherung gewünscht ist, kann diese zum Beispiel dadurch geschaffen werden, daß Antriebswelle 10 und Bohrung 26 im Kontaktbereich nicht zylindrisch, sondern unrund, zum Beispiel zur Bildung einer Kerbverzahnung bzw. Keilwellenverbindung, ausgebildet sind. Bei Sonderausführungen kann die Spindelaufnahmeeinrichtung auch integraler Bestandteil der Antriebswelle sein und mit dieser ein einziges, spindelseitig entsprechend bearbeitetes Bauteil bilden.

Der Körper 24 hat im Bereich des Axiallagergehäuses 16 einen im wesentlichen zylindrischen Abschnitt 27, dessen Durchmesser geringfügig kleiner ist als der Innendurchmesser des Axiallagergehäuses im Bereich des Flanschabschnitts 19. Etwa mittig im zylindrischen Abschnitt 27 ist ein Flanschabschnitt 28 mit zwei planparallelen, axialen, ringförmigen Begrenzungsflächen 29, 30 einstückig ausgebildet. Ein über die Vorderseite des Axiallagergehäuses 16 hinausragender, mehrfach durchmessergestufter Außenabschnitt des Körpers 24 der Spindelaufnahmeeinrichtung hat in seinem axialen Endbereich einen glattwandigen Innenkonusabschnitt 31 mit einem Öffnungswinkel von ca. 5° sowie im sich zum Vorderende verjüngenden, dünnerwandigen Bereich ein Außengewinde 32, auf das eine von der Spindel durchgriffene Überwurfmutter 33 aufschraubbar ist. Die Überwurfmutter 33 hat in ihrem axialen Kopfabschnitt 34 eine zylindrische Bohrung 35, deren Durchmesser nur geringfügig größer ist als der Außendurchmesser der Spindel 4. Die Überwurfmutter hintergreift mit dem Kopfabschnitt einen radialen Vorsprung 36 des Spindelendabschnittes 37, wobei der radiale Vorsprung 36 durch eine axiale Stirnseite eines auf den Spindelendabschnitt aufgeschraubten Adapterteils 40 gebildet ist. Das Adapterteil 40 hat eine zu dein Innenkonusabschnitt 31 komplementäre Außenkonusfläche 41 und ein dem Außengewinde 3 der Spindel entsprechendes Innengewinde 42. Durch das Adapterteil 40 kann der Spindelendabschnitt 37 auf einfache Weise für eine zentrierte, drehfeste und axialfeste Preßpassung mit der Spindelaufnahmeeinrichtung vorbereitet werden. Nach dem Trennen und Entgraten sind an der Spindel hierzu keine weiteren materialabtragenden Bearbeitungen nötig. Es wird einfach das Adapterteil auf den Spindelendabschnitt aufgeschraubt, so daß dieser die für das Zusammenwirken mit der Spindelaufnahmeeinrichtung optimale Außenkontur erhält.

In dem Axiallagergehäuse 16 ist ein reines Axiallager 45 für die Spindelaufnahmeeinrichtung vorgesehen. Wenn die Spindelaufnahmeeinrichtung fest mit der Motorwelle verbunden ist, dann bildet das Axiallager 45 gleichzeitig ein Axiallager für die Motorwelle 10 und entlastet damit die normalerweise nicht für eine starke axiale Belastung ausgelegten Lager 14 der Wellenlageranordnung 11 des Motors 8. Andererseits kann die radiale Lagerung der starren Motorwelle/Spindelaufnahmeeinrichtung-Kombination im wesentlichen vollständig von den Lagern der Motorwelle aufgenommen werden, so daß das Axiallager 45 nicht zur Aufnahme radialer Kräfte ausgebildet sein muß, sondern auf die Aufnahme ggf. großer axialer Belastungen optimiert werden kann.

Das Axiallager 45 ist bei der gezeigten Ausführungsform ein in beide Axialrichtungen abstützendes Axialnadellager, dessen Lagerspiel über eine in den Innengewindeabschnitt 21 einschraubbare Einstellmutter 46 einstellbar ist. Die in Richtung auf den Motor 8 wirkenden Axialkräfte werden durch das motorzugewandte, in der Zeichnung linke Axialnadellager 47 aufgenommen. Dieses hat koplanar rotierende, zylindrische Wälzkörper 48, die zwischen einem an der Vorderseite des Flansches 19 angebrachten ebenen Lagerring 49 und einem an der motorzugewandten Seite des Flanschabschnittes 28 befestigten, ebenen Lagerring 50 drehen. Die vom Motor wegführenden Axialbelastungen werden durch das analog aufgebaute äußere, in der Zeichnung rechte Axialnadellager 51 aufgenommen, dessen zylindrischen Wälzkörper zwischen einem an der Vorderseite des Flanschabschnitts 28 angebrachten Lagerring und einem an der diesen zugewandten Innenseite der Einstellmutter angebrachten, gleichartigen Lagerring drehen. Bei den beiden Axialnadellagern 47 und 51 stehen die zylindrischen Wälzkörper jeweils in linienhaftem Abrollkontakt mit den harten, ebenen Lagerflächen der Lagerringe, wodurch die Axiallagereinrichtung 45 in beiden Richtungen axial stark belastbar ist. Das Lagerspiel wird dabei durch Einschrauben der Einsteilmutter 46 eingestellt, deren axiale Position über (nicht gezeigte) Feststellschrauben nach Einstellung des Lagerspiels festsetzbar bzw. festlegbar ist.

Die Montage des gezeigten Motors mit integriertem Festlager kann wie folgt vorgenommen werden. Zunächst wird das Axiallagergehäuse 16 auf die Frontseite des Motorgehäuses 9 geschraubt. Die Axiallager 47, 51 werden im Bereich des radial vorstehenden Flanschabschnitts 28 des Körpers 24 der Spindelaufnahmeeinrichtung von gegenüberliegenden Seiten aufgesetzt. Anschließend wird die mit Lagern versehene Spindelaufnahmeeinrichtung bei noch nicht eingeschraubter Einstellmutter 46 axial auf den herausragenden Motorwellenendabschnitt aufgesteckt. Vor dem Aufstecken werden die Innenseite der Bohrung 26 und der äußere Abschnitt der Motorwelle mit Klebstoff versehen. Wenn der Körper der Spindelaufnahmeeinrichtung bis etwa in die gezeigte Position auf die Motorwelle aufgesteckt ist, so kann er dank des noch nicht ausgehärteten Klebstoffs axial auf der Motorwelle schwimmen. Nun wird durch Einschrauben der Einstellmutter 46 das axiale Lagerspiel des Axiallagers 45 eingestellt. Hierbei ist besonders vorteilhaft, daß durch die noch schwimmende Führung der Spindelaufnahmeeinrichtung auf der Motorwelle die axialen Einstellkräfte nicht auf die Motorwelle 11 übertragen werden, die im wesentlichen axialspannungsfrei bleibt. Durch den Lagerspiel-Einsteilvorgang wird also zunächst die optimale Axialstellung der Spindelaufnahmeeinrichtung auf der Motorwelle selbsttätig eingestellt. Durch das anschließende Aushärten des Klebstoffs erfolgt eine axialfeste und drehfeste Verbindung von Motorwelle und Spindelaufnahmeeinrichtung. Die Festlagereinrichtung 1 mit integriertem Motor bzw. der Motor 8 mit integriertem Festlager ist damit fertig montiert. Es ist auch möglich, zunächst das noch nicht am Motor befestigte Lager axial einzustellen und danach Lager und Motorwelle miteinander zu verbinden, bevor das Lager am Motorgehäuse befestigt wird.

Für den Einsatz sowohl als Festlager, als auch als Antrieb für die Spindel 4 des Gewindetriebes kann das Motorgehäuse dann fest auf einem Maschinenbett oder dergleichen beispielsweise durch Anschrauben befestigt werden. Die Verbindungsherstellung mit der Spindel erfolgt nun einfach dadurch, daß zunächst die Spindel auf die richtige Länge abgelängt und die Trennstelle ggf. entgratet wird. Anschließend wird zunächst die Überwurfmutter 33 über das Spindelende geschoben und anschließend das Adapterteil 40 auf das Spindelende aufgeschraubt. Durch das Adapterteil 40 erhält das Spindelende die optimale Außenkonuskontur, die ein zentrisches Einsetzen in die konische Aufnahmeöffnung 31 der Spindelaufnahmeeinrichtung ermöglicht. Zur Erzeugung einer drehfesten und axialfesten Verbindung zwischen der Spindelaufnahmeeinrichtung und Spindel wird die Überwurfmutter über das Außengewinde 32 auf die Stirnseite der Spindelaufnahmeeinrichtung aufgeschraubt, bis der Kopfabschnitt 34 der Überwurfmutter am durch das Adapterteil 40 gebildeten radialen Vorsprung 36 anliegt. Bei weiterem Festziehen der Überwurfmutter wird einerseits die Spindel axial weiter in die konische Aufnahme 31 unter Bildung eines großflächigen Preßsitzes der zusammenwirkenden Konusflächen eingepreßt. Die konische Form bewirkt andererseits, daß das Adapterteil symmetrisch in radialer Richtung zusammengepreßt wird, so daß ohne gesonderte Befestigungsmittel wie Kleber, Schrauben, Löten oder dergleichen ein drehfester Sitz des eingespannten Adapterteils auf der zugehörigen Spindel erreicht wird. Die Überwurfmutter wird zum Abschluß durch eine durch die radiale Gewindebohrung 54 der Überwurfmutter eingeschraubte Feststellschraube festgelegt.

Die durch die Erfindung mögliche Festlagerung eines Spindelendes hat eine sehr kompakte Bauform in axialer Richtung, da auf die bisher übliche und erforderliche Kupplung zwischen Motorwelle und Spindel bzw. Spindelaufnahme verzichtet werden kann. Zudem ist der Motor durch die Axiallagereinrichtung 45 wirksam von Axialkräften entlastet. Insbesondere sind die motorinternen Motorwellenlager axial entlastet, so daß auch bei längerem Betrieb weder ein Heißlaufen des Motors noch übermäßiger Verschleiß zu befürchten sind. Die für die Lebensdauer und den Wirkungsgrad des Gewindetriebes vorteilhaften axialspannungsfreien Bedingungen im Motor werden durch die exakte Einstellung der Axiallage der Spindelaufnahmeeinrichtung auf der Motorwelle und dem beschriebenen Klebevorgang beim Einstellen des Lagerspieles gefördert.

## Patentansprüche

1. Festlagereinrichtung (1) für eine Spindel (4) eines linearen Gewindetriebs, mit einer antreibbaren, mittels einer Wellenlageranordnung (11) drehbar gelagerten Antriebswelle (10), einer mit der Antriebswelle fest verbindbaren oder verbundenen Spindelaufnahmeeinrichtung (25), an der ein Spindelendabschnitt (37) lösbar befestigbar ist, und mit einer spindelseitig von der Wellenlageranordnung angeordneten Axiallagereinrichtung (45) zur axialen Lagerung der Spindelaufnahmeeinrichtung.

2. Festlagereinrichtung nach Anspruch 1, dadurch gekennzeichnet, daß ein Motor (8) des Gewindetriebes in die Festlagereinrichtung (1) integriert ist, wobei vorzugsweise die Antriebswelle durch die Motorwelle (10) gebildet ist.

3. Festlagereinrichtung nach Anspruch 1 oder 2, dadurch gekennzeichnet, daß die Axiallagereinrichtung (45) in einen gesonderten Axiallagergehäuse (16) untergebracht ist, das, vorzugsweise unmittelbar, an ein Gehäuse (9) einer Antriebskomponente des Gewindetriebes, insbesondere des Motors (8) oder eines Getriebes, anbringbar, insbesondere an dieses anschraubbar ist.

4. Festlagereinrichtung nach einem der vorhergehenden Ansprüche, dadurch gekennzeichnet, daß die Axiallagereinrichtung (45) zur Aufnahme von Axialkräften in beiden Axialrichtungen ausgebildet ist und/oder daß die Axiallagereinrichtung (45) als reines Axiallager ausgebildet ist und/oder daß die Axiallagereinrichtung (45) als Axialnadellager ausgebildet ist.

5. Festlagereinrichtung nach einem der vorhergehenden Ansprüche, dadurch gekennzeichnet, daß die Axiallagereinrichtung eine Einstelleinrichtung (46) für das axiale Lagerspiel aufweist, wobei vorzugsweise eine im wesentlichen ebene, axiale Lageraußenfläche an einer innerhalb eines Gewindes (21) geführten, axial verschiebbaren Einstellmutter (46) ausgebildet oder dieser zugeordnet ist.

6. Festlagereinrichtung nach einem der vorhergehenden Ansprüche, dadurch gekennzeichnet, daß die Spindelaufnahmeeinrichtung (25), vorzugsweise unmittelbar, drehfest und axialfest mit der Antriebswelle (10) verbunden ist und/oder daß die Spindelaufnahmeeinrichtung (25) auf die Antriebswelle (10) axial aufsteckbar oder aufgesteckt ist und/oder daß die Spindelaufnahmeeinrichtung (25) stoffschlüssig mit der Antriebswelle (10) verbunden, insbesondere mit dieser verklebt ist.

7. Festlagereinrichtung nach einen der vorhergehenden Ansprüche, dadurch gekennzeichnet, daß eine Verbindung zwischen Antriebswelle (10) und Spindelaufnahmeeinrichtung (25) im wesentlichen axialspannungsfrei ist, insbesondere dadurch, daß die Verbindung nach Einstellung des axialen Lagerspiels des Axiallagers hergestellt ist.

8. Festlagereinrichtung nach einem der vorhergehenden Ansprüche, dadurch gekennzeichnet, daß die Spindelaufnahmeeinrichtung (25) als, vorzugsweise radialsymmetrisch wirkende, Klemmeinrichtung für einen Spindelendabschnitt (37) ausgebildet ist und/oder daß die Spindelaufnahmeeinrichtung (25) eine, vorzugsweise mit einem Innenkonusabschnitt (31) versehene, Spindelaufnahmeöffnung hat, in die ein der Spindel zugeordneter, vorzugsweise mit einem Außenkonusabschnitt (41) versehener, komplementär dimensionierter Einführabschnitt axial einführbar ist.

9. Festlagereinrichtung nach einem der vorhergehenden Ansprüche, dadurch gekennzeichnet, daß ihr mindestens ein lösbar an einem Spindelendabschnitt (37) befestigbares, insbesondere auf den Spindelendabschnitt aufschraubbares Adapterteil (40) zugeordnet ist, das zur lösbaren Befestigung an der Spindelaufnahmeeinrichtung (25) ausgebildet ist, wobei vorzugsweise das Adapterteil (40) eine zur Einführung in die Spindelaufnahmeöffnung angepaßte Außenkontur, insbesondere mit einem Außenkonus (41), aufweist, wobei vorzugsweise der Festlagereinrichtung (1) ein Satz von mindestens zwei unterschiedlichen Adapterteilen zur Anpassung der Spindelaufnahmeeinrichtung an Spindeln unterschiedlicher Durchmesser und/oder Gewinde zugeordnet ist.

10. Festlagereinrichtung nach einem der vorhergehenden Ansprüche, dadurch gekennzeichnet, daß eine Spanneinrichtung zum axialen Einspannen des Spindelendabschnittes (37) und/oder des Adapterteils (40) in die Spindelaufnahmeöffnung vorgesehen ist, vorzugsweise in Form einer eine spindelseitigen Radialvorsprung (36) hintergreifenden, auf ein Außengewinde (32) der Spindelaufnahmeeinrichtung aufschraubbaren Überwurfschraube (33).
